# EUROPEAN PATENT APPLICATION

(11) **EP 1 357 496 A1**
(43) Date of publication of application: **29.10.2003**
(21) Application number: 01995046.8
(22) Date of filing: 28.12.2001
(51) Int. Cl.: G06F 17/60

(54) **INFORMATION STORAGE MEDIUM WHERE PROGRAM FOR CHARGING AND USING CONTENT AND PROGRAM-LOADED DEVICE**

(30) Priority: 29.12.2000 JP 2000404942
(71) Applicant: Foursis Business Promotion Kabushiki Kaisha, Tokyo 101-0045 (JP)
(72) Inventor: NAKANISHI, Naoya, Foursis Business Promotion KKK, Chiyoda-ku, Tokyo 101-0045 (JP); TOYOTA, Yuichi, Kabushiki Kaisha CCP, Cyuo-ku, Tokyo 104-0031 (JP)
(74) Representative: Klunker . Schmitt-Nilson . Hirsch
(86) International application number: JP0111665
(87) International publication number: WO02056220

(57) **Abstract**

There is provided a program that is used for charging when contents are used and installed in a user terminal.

The program is equipped with attribute information detecting means for detecting attribute information for controlling use of a content, attribute information interpreting means, decode means for decoding the content according to the attribute information thus interpreted, and data control means for controlling output/use and carrying out processing of charging at the output/use time, and the program is used to carry out the charging at the use time in connection with processing of carrying out authentication for content use and charging to a user, content obtaining processing for obtaining the content at the user terminal by download or the like, use information indicating processing for indicating use information of the content by the user, processing of detecting the attribute information on control of content use which is contained in the content, and processing of decoding the content main body on the basis of the use information in the case where the charging processing is authenticated in response to the use request based on the use information and the content is used when the content main body is used.

## Description

### Technical Field

The present invention relates to a computer-readable information storage medium stored with a content charging program used to charge a user when the user downloads and outputs a content such as an image file from a content server through a computer network represented by the Internet.

### Background Art

Recent advancement of computer networks and communications environment has activated businesses such as commercial activities represented by the Internet. A large number of Web sites for shopping malls, auctions, etc. exist, and various charging techniques therefor have been developed.

In addition to information equipment such as personal computers, a portable information terminal, a cellular phone, PHS, and information home electronic appliances such as Internet TV sets and game machines have become widely popular. With respect to the cellular phones, such a type of cellular phones having a browser function appears, and allow a user to see Web pages of the Internet from each cellular phone terminal.

In such a situation, it has been possible for a user to access various contents through a computer network to see the contents, output the contents by print or the like and obtain the contents by download. Therefore, demand to a technique for the compensation to on-line acquisition of contents and the copyright thereof has quickly increased.

In such a situation, there has been developed a system of enabling various contents such as music to be distributed and browsed through an electronic network.

Furthermore, there have been also developed charging method for carrying out the charging caused by distribution and browsing of contents, a compression technique for information to be distributed or the like, an encrypting technique for protecting copyright, privacy information, etc., and an user interface for enabling users to utilize the system with a simple operation.

In such a conventional technique as described above, JP-A-11-224257 titled "ENCAPSULATED OBJECT CONSTRUCTING METHOD, ENCAPSULATED OBJECT SEARCH EXECUTING METHOD AND SYSTEM, AND STORAGE MEDIUM HAVING ENCAPSULATED OBJECT SEARCH-EXECUTING PROGRAM STORED THEREIN" discloses a technique in which a search application is started, the right to use the search application is inquired to a searcher owning the using right to use the search application, the right to use is obtained from the searcher, a search method is started with the right to use thus obtained as an argument, a search option is generated in multi-stage in the search method, index information is generated in multi-stage by the search method to develop a capsule, and the index information generated is searched as a search target by using the capsule-developed search option.

According to this technique, with regard to a multimedia object made impossible to be directly referred to by being encapsulated, an encapsulated object constructing method for searching an encapsulated object with precision varied in accordance with each searcher, which is characterized by providing a capsule with a multimedia object comprising a multimedia content and public index information, plural methods for capsule operation containing at least one search method for searching, and an interface for starting the search method. The encapsulated object construction method provides the following effect.

That is, when a digital content is searched or the like, index information is added to the content, so that an encapsulated content can be developed with precision varied in accordance with the search level and the content can be efficiently searched.

This publication discloses a method of searching a content through a network by using index information, however, this publication does not disclose a technique of carrying out charging processing at the time point when a user downloads or outputs a content and also carrying out the charging processing based on the content size, the content resolution, the content output method, etc. when the charging is carried out, and protecting the content when no charging processing is carried out (that is, in the case that download, output, or the like is not carried out)

Furthermore, JP-A-11-149707 titled "DIGITAL CONTENT DISTRIBUTION SYSTEM" discloses a technique in which when a software user who manages a data recording device transmits a request to a content distribution center for converting content software such as pictures or the like to digital data compressed on the time axis and accumulating the digital data thus compressed, the content distribution center distributes through an information transmitting means a collating code for collating a collation code and the time-axis compressed digital data of the content software corresponding to the request, the data recording device records the digital data when the collation between the collation code received and the identification code thereof succeeds, and a developing device develops the digital data compressed and recorded in the data recording device and outputs the digital data thus developed to an output device.

According to this technique, content software having a large information amount such as pictures, images, music, etc. which are desired by a user can be provided to the user at a low price without interposing media.

This publication discloses a compressing/developing method for a content having a large information amount, however, this publication also does not disclose the technique of carrying out the charging processing at the time point when a user downloads or outputs a content, particularly carrying out the charging processing based on the content size, the content resolution, the content output method, etc. when the charging is carried out, and protecting the content when no charging processing is carried out (that is, in the case that download output or the like is not carried out).

Besides, JP-A-10-269289 titled "DIGITAL CONTENT DISTRIBUTION MANAGING METHOD AND DIGITAL CONTENT REPRODUCING METHOD AND APPARATUS" discloses a technique of integrating into one chip a public encrypting/decrypting circuit for decrypting an encrypted content and encrypting a session key, a communication key holding memory, a point information storage memory for storing point information, a point using information storage memory for storing point using information, a common encrypting/decrypting circuit for decrypting the encrypted digital content, decrypting the encrypted point information and the encrypting the point using information, an expansion circuit for expanding a compressed digital content, and a D/A conversion circuit 1 for D/A-converting the digital content.

According to this technique, there can be provided an economical system which can be readily carried, allows users to enjoy digital contents at any time and at any place, and is sufficiently endurable to operation as the protection to copying or illegal use of the digital contents.

However, this publication also does not disclose the technique of carrying out the charging processing at the time point when a user downloads or outputs a content, particularly carrying out the charging processing based on the content size, the content resolution, the content output method, etc. when the charging is carried out, and protecting the content when no charging processing is carried out (that is, neither download nor output is carried out).

Furthermore, JP-A-8-54950 titled "SOFTWARE USE AMOUNT MEASURING DEVICE AND MULTIMEDIA INFORMATION OUTPUT DEVICE" discloses a software use amount measuring processing device that can determine the amount of use for which charging is properly carried out even when software is used in a using style other than a normal using style.

According to this invention, when an encrypted image data frame compressed in the MPEG standards is transmitted to an SD circuit, an DES decrypting portion decrypts the frame under the condition that the value of charging counter is equal to 1 or more. The image data frame thus decrypted is expanded in an MPEG expansion circuit one by one. The MPEG expansion circuit outputs a frame expansion completion signal to a frame counter portion every time one frame is expanded. The frame counter portion counts the frame expansion completion signal and outputs the count value to a unit converting portion. The unit converting portion instructs a charge counter register portion to decrement a charge count value every time the count value reaches a predetermined reference value.

This publication discloses the charging processing when encrypted databased on the MPEG standards are decrypted, however, this publication does not disclose any techniques that are coefficient to carry out the charging processing based on the content size, the content resolution, the content output method, etc. when the charging is carried out and allows a content user to instruct the size, the resolution, the output method, etc. at the time when the charging is carried out, also does not disclose the data structure of the contents to implement the technique, and does not discloses any techniques of carrying out charging by using the content data.

Furthermore, JP-A-6-141004 titled "CHARGING SYSTEM" discloses a technique of realizing so-called "Pay Per Program" in which each individual program is watched/listened to with pay without a comprehensive contract.

According to this invention, for a pay-program viewing/listening application made from a pay-program viewing/listening applicant through a public telephone and telegraph line, charging center transmits to a data communication device a viewing/listening permission code for viewing/listening to a pay program, and take a toll. At a reception device receiving the viewing/listening permission code, the pay program is viewed/listened to according to the viewing/listening permission code. One of three modes of fixing/selection/alteration is adopted for scrambling of broadcast programs, one of three modes of time designation/program number designation/temporary number designation is used for the viewing/listening application and one of three modes of decode data/non-public program number/decode data number is used as the viewing/listening permission code.

This publication discloses the charging processing in the program viewing/listening, however, it does not disclose any techniques that are coefficient to carry out the charging processing based on the content size, the content resolution, the content output method, etc. when the charging is carried out and allows a content user to instruct the size, the resolution, the output method, etc. at the time when the charging is carried out, also does not disclose the data structure of the contents to implement the technique, and does not disclose any techniques of carrying out charging by using the content data.

Furthermore, as a technique of obtaining an authentication key, JP-A-2000-90039 titled "MUSIC DISTRIBUTION METHOD, TRANSMISSION DEVICE AND METHOD, AND REPRODUCING DEVICE AND METHOD" discloses a technique to take the protection of copyright of distributed music data into consideration in a system for distributing music data.

According to this invention, a terminal device, identification information, charging processing and digital audio data are provided, and a music server and a client are connected to the Internet. At the client side, a public key and a secret key are created on the basis of ID inherent to a reproducing device. The public key is transmitted to and registered in the server, and the secret key is held in the device. Distribution of music data is requested from the client to the server. Music data picked up from a music DB are encrypted with the public key.

The music data thus encrypted are transmitted to the client and stored in the reproducing device. In the reproducing operation, music data are reproduced while being decrypted with the secret key held in the device. Since the music data stored in the reproducing device are encrypted with the key created on the basis of ID inherent to the device, it cannot be reproduced by other reproducing devices.

This publication discloses a technique for distribution of music data, charging processing and copyright protection, however, the data cannot be reproduced by the other reproducing devices because the charging processing is carried out by using ID inherent to the reproducing device.

Furthermore, JP-A-8-55021 titled "KEY AUTHENTICATION SYSTEM" discloses a technique to enhance the security of sales of software without complicating a storage medium of software and also reduce the time load on users.

According to this invention, a module which can be installed or detachably mounted in hardware is provided for a software storage medium or encrypted software achieved through communications. The module has a function of generating unique information inherent to a user, and a center for managing software is provided with a function of creating permission information based on information inherent to the user. On the basis of the information created in the module and the permission information created in the center, it is judged whether the user is a legal user to which use of software is permitted.

As described above, the technique for judging whether the user is a proper user to which use of software is permitted is disclosed, however, this publication does not disclose any techniques that are coefficient to carry out the charging processing based on the content size, the content resolution, the content output method, etc. when the charging is carried out and allows a content user to instruct the size, the resolution, the output method, etc. at the time when the charging is carried out, also does not disclose the data structure of the contents to implement the technique, and does not disclose any techniques of carrying out charging by using the content data.

Furthermore, as a technique on the charging processing at the print operation, for example JP-A-11-119937 titled "NETWORK PRINTER" discloses a technique to enable a correct charging management in a network printer adapted for a multi-protocol.

According to this invention, a network printer is equipped with a network adapter having a communication protocol portion for receiving multi-protocol communication print data containing charging information and print target data, a communication application portion for adding the communication print data with a printing command and outputting the data, and charging management protocol selecting means for outputting a communication protocol selected by a user and the communication print data in the communication application when charging management is carried out, a controller or receiving and outputting the communication print data output from the network adapter, a print portion for printing the print target data, and a charging management portion for obtaining charging information from the print portion.

There has been implemented a network printer that can perform the charging management by using multi-protocol communication print data containing charging information and print target data as described above. However, this publication does not disclose any techniques that are coefficient to carry out the charging processing based on the content size, the content resolution, the content output method, etc. when the charging is carried out and allows a content user to instruct the size, the resolution, the output method, etc. at the time when the charging is carried out, also does not disclose the data structure of the contents to implement the technique, and does not disclose any techniques of carrying out charging by using the content data.

A browser has been hitherto used as software to view Web pages. A file constituting a WEB page such as an HTML file comprises characters and characters describing information such as the basic structure, layout, of that page, and the browser has the basic function of interpreting the above information. When there is an image file associated with the HTML file through hyper link, the browser interprets the name and location of the file from the description in the HTML file, and displays the image file as a WEB page.

In order to implement functions which are not owned by the browser, various kinds of plug-in software have been known as software to be additionally installed in the browser so that high-level functions and dedicated functions which are not inherently owned by the browser can be used.

These are plug-in software for sounds, animation, moving pictures, etc., for example.

Once the plug-in software is installed into a terminal, it is usable as if it functions integrally with the browser.

Furthermore, at a WEB site where plug-in software is required to view the WEB site, a hyper link to a place at which the plug-in software required to view the WEB site is achieved is frequently set for users who do not have the plug-in software, and the plug-in software is usable by downloading and installing the plug-in software at that place.

Therefore, in order to solve the problem, an object of the present invention is to provide an information storage medium stored with a program for carrying out charging processing at the time point when a user downloads or outputs a content, particularly carrying out the charging processing in accordance with the size, resolution, output method, etc. of the content, and also protecting the content when the charging processing is not carried out (that is, when neither download nor output is carried out).

Furthermore, an object of the present invention is to provide an information recording medium stored with a program which is efficient to carry out the charging processing in accordance with the size, resolution, output method, etc. of a content and allows a content user to indicate the size, the resolution, the output method, etc. at the time when the charging processing is carried out.

Still furthermore, an object of the present invention is to provide a program-installed device such as a computer terminal in which the program concerned is stored.

### Summary of the Invention

In order to solve the above problem, according to the invention of claim 1, there is provided a computer-readable information storage medium having a program stored therein, the program being installed in a user terminal and used to carry out charging processing when using a content containing sample data of the content, the data of the main body of the content, charging information on a compensation for use of the content, attribute information on control of the content use, and a unique ID for identifying the content, characterized in that the program is equipped with attribute information detecting means for detecting the attribute information, attribute information interpreting means for interpreting the attribute information thus detected, decode means for decoding the content according to the attribute information thus interpreted, and data control means for carrying out data processing for output/use control and charging at the output/use time, wherein the charging at the use time is carried out by the processing of authenticating a user for the content use and charging, content obtaining processing of obtaining a content at the user terminal by download or the like, use information indicating processing of indicating use information of the content by the user, processing of detecting the attribute information on the control of use of the content which is contained in the content, and processing of decoding the content main body on the basis of the use information when charging processing is authenticated in response to a use request based on the use information and the content main body is used, and making use of the content like outputting the content or the like, and if the charging processing in response to the use request based on the use information is not authenticated, it is made impossible to decode and use the content main body.

Furthermore, in order to solve the above problem, according to the invention of claim 2, there is provided a computer-readable information storage medium having a program stored therein, the program being installed in a user terminal and used when data containing at least data of the main body of a content or data for identifying and indicating the data of the content main body, and attribute information on control of use of the content are achieved and used, characterized in that the program is equipped with attribute information detecting means for detecting the attribute information, attribute information interpreting means for interpreting the attribute information thus detected, decode means for decoding the content according to the attribute information thus interpreted, and data control means for carrying out data processing for output/use control and charging at the output/use time, wherein the charging at the use time is carried out in connection with processing of authenticating a user for the content use and charging, content obtaining processing of obtaining a content at the user terminal by download or the like, use information indicating processing of indicating use information of the content by the user, processing of detecting the attribute information on the control of use of the content which is contained in the content, and processing of decoding the content main body on the basis of the use information if charging processing is authenticated in response to a use request based on the use information to use a content when using the content main body is used, and making use of the content like outputting the content or the like, and if the charging processing in response to the use request based on the use information is not authenticated, it is made impossible to decode and use the content main body.

In order to solve the above problem, according to the invention of claim 3, in the program according to claim 1 or 2, the content used in the system contains sample data of the content, charging information on compensation information of the content, a unique ID for identifying the content, and further URL information indicating the location of the content main body in place of the data of the content main body, the program is equipped with attribute information detecting means for detecting the attribute information, attribute information interpreting means for interpreting the attribute information thus detected, decode means for decoding the content according to the attribute information thus interpreted, and data control means for carrying out data processing for output/use control and charging at the output/use time; and the charging at the use time is carried out in connection with processing of authenticating a user for the content use and charging, content obtaining processing of obtaining a content at the user terminal by download or the like, use information indicating processing of indicating use information of the content by the user, processing of detecting the attribute information on the control of use of the content which is contained in the content, and processing of decoding the content main body on the basis of the use information if charging processing is authenticated in response to a use request based on the use information to use a content when the content main body located at the URL is used, and making use of the content like outputting the content or the like, and if the charging processing in response to the use request based on the use information is not authenticated, it is made impossible to decode and use the content main body.

In order to solve the above problem, according to the invention of claim 4, in the program according to claim 1 or 2, the content used in the system contains sample data of the content, charging information on compensation information of the content, a unique ID for identifying the content, and further a content location ID for identifying the location of the content main body on a network in place of the data of the content main body, the program is equipped with attribute information detecting means for detecting the attribute information, attribute information interpreting means for interpreting the attribute information thus detected, decode means for decoding the content according to the attribute information thus interpreted, and data control means for carrying out data processing for output/use control and charging at the output/use time; and the charging at the use time is carried out in connection with processing of authenticating a user for the content use and charging, content obtaining processing of obtaining a content at the user terminal by download or the like, use information indicating processing of indicating use information of the content by the user, processing of detecting the attribute information on the control of use of the content which is contained in the content, and processing of decoding the content main body on the basis of the use information if charging processing is authenticated in response to a use request based on the use information to use the content when using the content main body located on the network which is identified by the content location ID, and making use of the content like outputting the content or the like, and if the charging processing in response to the use request based on the use information is not authenticated, it is made impossible to decode and use the content main body.

In order to solve the above problem, according to the invention of claim 5, there is provided a computer-readable information storage medium having the program for the content charge as claimed in any one of claims 1 to 4, characterized in that the use of the content corresponds to an output from a printer, the attribute information on the control of the content use which is contained in the content is detected, the processing of downloading the content is passed, and an output instruction is made from data control means to a printer on the basis of the attribute information for outputting the content according to the indicated use information.

In order to solve the above problem, according to the invention of claim 6, there is provided a computer-readable information storage medium stored with the program for the content charge as claimed in any one of claims 1 to 4, characterized in that the use of the content corresponds to an output to an external storage device equipped or connected to the user terminal, the attribute information on the control of the content use which is contained in the content is detected, the processing of downloading the content is passed, and an output instruction is made from data control means to the external storage device on the basis of the attribute information for outputting the content according to the indicated use information.

In order to solve the above problem, according to the invention of claim 7, there is provided a computer-readable information storage medium stored with the program for the content charging claimed in any one of claims 1 to 6, characterized in that the program is started when the user selects or clicks the sample data of a content displayed.

In order to solve the above problem, according to the invention of claim 8, there is provided a computer-readable information storage medium stored with the program for the content charging as claimed in claim 1 to 7, characterized in that the program is equipped with indicating means for indicating one or a plurality of size, expiration date, resolution, output/using method and other conditions of the content, and the charging is carried out according to a condition indicated by the user.

In order to solve the problem, according to the invention of claim 9, there is provided a program-installed device for content charging which is carried out in connection with use of a content by using a computer system having input means, storage means, control means, display means and output means, characterized in that the program stored in the information storage medium as claimed in any one of claims 1 to 8 is stored in the storage means.

In order to solve the problem, according to the invention of claim 10, there is provided a program-installed device for content charging as claimed in claim 9, characterized in that in processing of authenticating a user, authentication is carried out by authentication means using a hardware key equipped to a user terminal.

In order to solve the problem, according to the invention of claim 11, there is provided a computer-readable information storage medium stored with the program for content charging as claimed in claim 9 or 10, characterized in that the content is achieved through the processing of obtaining from a content server existing on a computer network by download or the like, and information for carrying out the charging in accordance with an output based on use information of the content is received/transmitted from/to the content server.

### Brief Description of the Drawings

Fig. 1 is a diagram showing the data structure containing sample data of a content, data of content main body, charging information on a compensation for use of the content, attribute information on control of the content use, and a unique ID for identifying the content;
Fig. 2 is a diagram showing the data structure containing sample data of a content, URL information indicating the location of the content main body, charging information on a compensation for use of the content, attribute information on control of the content use, and a unique ID for identifying the content;
Fig. 3 is a diagram showing the data structure containing sample data of a content, a content location ID for identifying the location of the content main body on a network, charging information on a compensation for use of the content, attribute information on control of the content use, and a unique ID for identifying the content;
Fig. 4 is a system construction diagram showing an example of the basic construction of a system for carrying out charging for a content;
Fig. 5 is a function block diagram showing the processing and function of a program stored in an information recording medium according to the present invention;
Fig. 6 is an screen image diagram showing an example of a user terminal screen for operating the program for the charging processing when a content is downloaded from the content server and output/used by using the program stored in the information storage medium;
Fig. 7 is an screen image diagram showing an example of a user terminal screen for operating the program for the charging processing when a content is downloaded from the content server and output/used by using the program stored in the information storage medium;
Fig. 8 is an screen image diagram showing an example of a user terminal screen for operating the program for the charging processing when a content is downloaded from the content server and output/used by using the program stored in the information storage medium;
Fig. 9 is a flowchart showing the flow of the basic processing when the above processing is carried out by using the program stored in the information storage medium according to this invention;
Fig. 10 is a flowchart showing the flow of the basic processing when the above processing is carried out by using the program stored in the information storage medium according to this invention;
Fig. 11 is a flowchart showing the flow of the basic processing when the above processing is carried out by using the program stored in the information storage medium according to this invention;
Fig. 12 is a flowchart showing the flow of the basic processing when the above processing is carried out by using the program stored in the information storage medium according to this invention;
Fig. 13 is a block diagram showing an example of the data flow when attribute information contained in an image content is detected and interpreted at a user terminal downloading the image content, decodes the content according to the attribute information on the control of the content use, and makes use of the content like outputs the content or the like; and
Fig. 14 is a diagram showing information to be set in an IC chip of USB when a USB key is used as an authentication key.

### Best Modes for Carrying out the Invention

Embodiments according to this invention will be described hereunder with reference to the drawings.

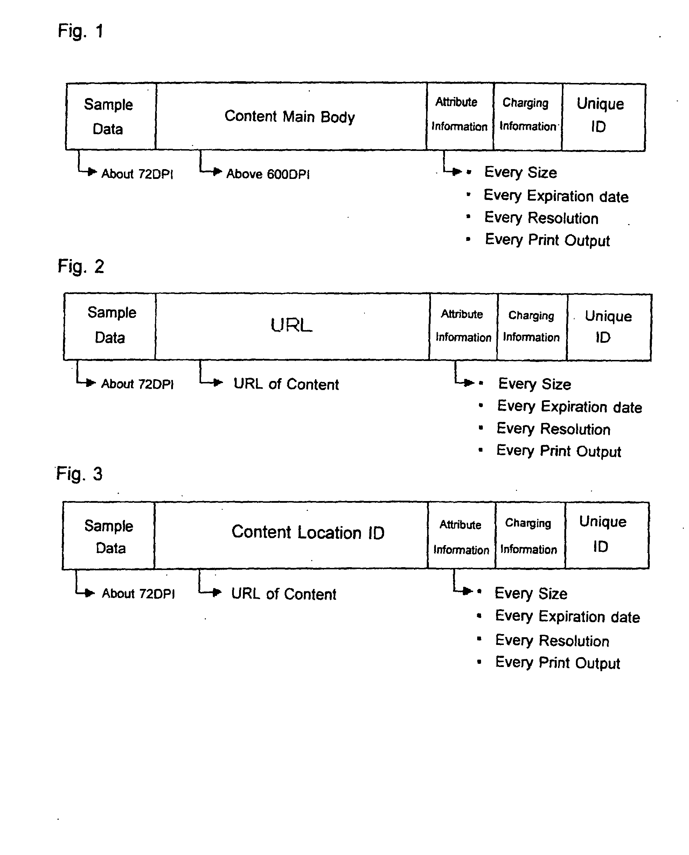

Fig. 1 is a system construction diagram showing an example of the basic construction of a system for content charging for which a program stored in an information recording medium according to this invention is used.

The system is basically constructed by a large-scale database server, an image accumulating/distributing server, a WEB server, a mail server, an application server, a search server, etc., and it is desirable that each server is multiplexed and security is kept for each server when necessary.

The system construction diagram is one of preferable examples, and thus this invention is not limited to this construction.

The program stored in the information storage medium according to this invention is used for the charging processing when a content is downloaded from a content server existing on a computer network and then subjected to output of a printer or other using manners, and thus it is not dependent on (affected by) the construction of the server, etc. of the system insofar as these functions and processing can be performed.

First, the basic construction of the system for content charging to which the program stored in the information recording medium according to this invention is used, and the basic data structure of the content used there will be described.

### (Basic Data Structure of Content)

First, the data structure of contents (images, moving pictures, software, etc.) used in a content charging system according to this invention will be described.

The contents are images or other types of contents comprising computer-readable data, and stored in a storage device such as a database server for storing contents, an external storage device such as a hard disc, a floppy disk, MO, a memory stick (trademark), smart media (trademark) or other types of information storage media.

The contents used in this invention contain character data, still picture data, moving picture data, animation image data, presentation data, slide data, audio data, game software, application program software and other types of data, and they are constructed in the following file format.

As the file format for still pictures are used JPEG (Joint Photographic Experts Group), PICT (QuickDraw Picture Format), BMP (Bitmap), GIF (Graphics Interchange Format), PNG (Portable Network Graphics), etc.

As the file format for moving pictures are used MPEG-1, MPEG-2, MPEG-4, RV (Real Video) , MNG (Multiple-image Network Graphics), AVI (Audio Video Interleaved), etc.

As the file format for sounds are used AIFF (Audio Interchange File Format), WAV (Waveform), AU, RA (Real Audio), the MPEG-1 audio compression system, the MPEG-2 audio compression system, the MPEG-4 audio compression system, etc.

As the file format based on the multiplexed system of moving pictures and sounds are used QUICKTIME, MPEG-1, MPEG-2PS, etc.

PDF (Portable Document Format) is used as an example of the document file format, and Zip, Lzh, etc. are used as the compression file format having the archive function.

Furthermore, various types of file formats other than described above may be used.

It has been normally adopted to append these files with file names, file creating dates, file creators' names, etc. as header information, etc. of the files as well as the data of the contents themselves.

According to this invention, charging can be properly carried out in accordance with the content size, the content resolution, the content output method, and other detailed conditions of the content by adopting the data structure described below.

An example of the data structure of a content used in the invention according to claim 2 is shown in Fig. 1, and it contains sample data of the content, the data of the content main body, charging information on the compensation for use of the content, attribute information on the control of use of the content, a unique ID for identifying the content, etc.

As a preferable example of the data format, for example, the sample data is a JPEG-format based image having a resolution of 72dpi or more, and the data of the content main body (in this case, image) is an image of the original format having a resolution of 600dpi or more.

In the prior art, when a content such as an image is displayed on WEB, it is displayed in the form of a small (low in resolution) thumbnail, and the thumbnail of an image which a user wishes to view is selected from thumbnails and clicked or the like to display the content main body such as an image or the like. The content images and the thumbnails images thereof are separately preserved as different images.

In the above embodiment, these data are managed as single data. In addition, a unique ID with which a content concerned can be uniquely identified from many contents is allocated, and further the charge for use of a content, that is, the above-described charging information which is based on a way of using a content, such as downloading or printing the content, an output service, the size or resolution of the content, etc. is managed as one-record data.

At least a field of the sample data, the data of the content main data, the charging information, the attribute information and the unique ID is provided in one record, and codes indicating the locations of the sample data, etc. when these data are read out are normally provided, whereby the various problems described above can be solved by this invention.

The data structures of contents in the other claims are the same as described above.

An example of the data structure of the content according to claim 3 is shown in Fig. 2, and it contains the sample data of a content, URL information indicating the location of the content main body, charging information on the compensation for use of the content, attribute information on the control of use of the content and a unique ID for identifying the content.

As a preferable example of the data format, for example, the sample data is a JPEG-format based image having a resolution of 72dpi or more, and the data of the content main body (in this case, an image) is an image located at a place indicated by URL.

An example of the data structure of the content according to claim 4 is shown in Fig. 3, and it contains the sample data of a content, an content location ID for identifying the location of the content main body on a network, charging information on the compensation for use of the content, attribute information on the control of use of the content and a unique ID for identifying the content.

As a preferable example of the data format, for example, the sample data is a JPEG-format based image having a resolution of 72dpi or more, and the data of the content main body (in this case an image) is an image located at a place indicated by the content location ID. The data of the content location IDs are managed by a database in a storage device such as a database server, and ID allocated to each content and data specifying URL or the location on a network at which the content exists are stored while being associated with each other. The database is searched by using the content location ID as a key to specify the location of the content main body.

In any content, as claimed in claim 8, the charging information owned by the content may contain one or a plurality of the following data: the size, expiration date, resolution, output method, and other conditions of the content.

The attribute information on the control of use of the content contains attribute information to limit content users to members or the like, attribute information to control flow or use of the content or the like.

The contents contain various styles of data such as image data, moving picture data, animation images, audio data, character data, computer game software, computer programs and combinations thereof.

Furthermore, the content used in the invention according to claim 1 may be only data containing at least the data of content main body or data for identifying and indicating a content which is required to be used, and attribute information on the control of use of the content, and the content of the claim 1 has a concept which more broadly contains various contents than the data structure of the contents used in the invention of claims 2 to 4. For example, the sample data may exit at a different place, and the content main data may exist at a different place.

### (Basic Construction of System)

The program stored in the information storage medium according to this invention is installed in a user terminal using contents.

For example, it is assumed as a normal style that the program is used in a system constructed on a network as described later in order to distribute or download contents through a computer network represented by the Internet, for example. The following system construction is an example, and it may contain various other constructions.

Furthermore, there is also expected such a style that the program of this invention is used by obtaining contents from a storage medium such as CD-ROM at a stand-alone user terminal which is not connected to any network, or the program of this invention is used when contents are used in a closed network such as LAN.

There will be described a representative example of the basic construction of the system for carrying out the charging for contents in which the information storage medium having the program of this invention stored therein is used.

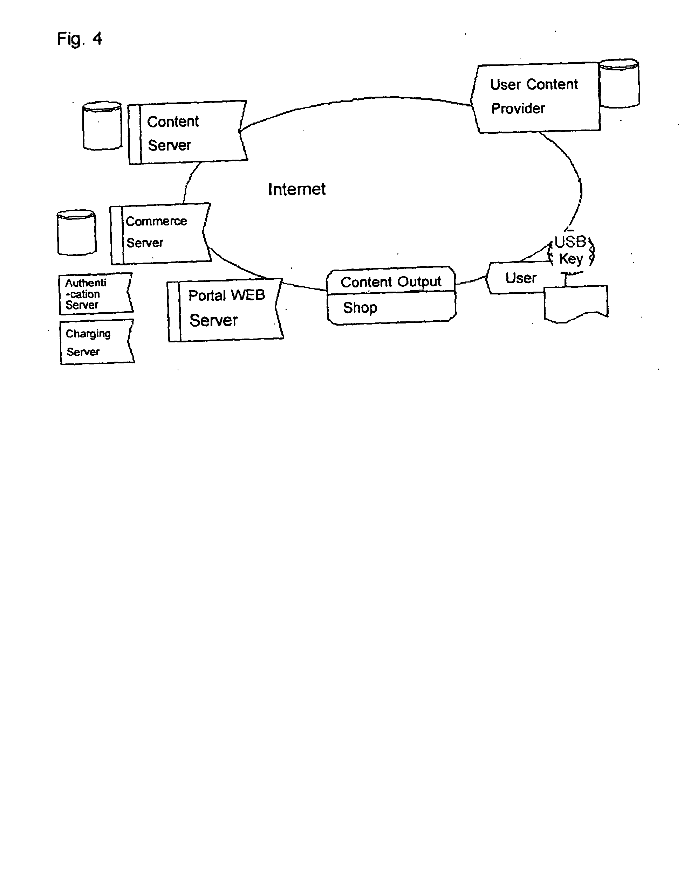

Fig. 4 is a system construction diagram showing an example of the basic construction of the system for carrying out the content charging.

The content charging system according to this invention is equipped with a content server for storing contents such as images, etc. on a computer network.

The functions of the content server contain the following processing.
(1)The content server accepts a processing request from the commerce server, and transmits a processing result to the commerce server.
(2) The content server carries out registration, renewal and deletion of contents.
(3) The content server encodes contents.

It is desirable that the commerce server and the content server are connected to each other by a high-security system.

Next, the content charging system of this invention is equipped with the portal Web server which users access to use and purchase contents.

The functions of the portal Web server contain the following processing.
(1) The portal WEB server relays an image distribution service request from a user (browser) to the commerce server.
(2) The portable WEB server relays a response from the commerce server to the user.
(3) The portal WEB server and the commerce server are connected to each other by a high-security system.

The content charging system of this invention is equipped with the commerce server for managing the information on the users and the information on the use and purchase of the contents by the users.

The functions of the commerce server contain the following processing.
(1) The commerce server accepts a processing request from the portal Web server and transmits a processing result to the portal Web server.
(2) The commerce server carries out authentication of users (authentication server function).
(3) The commerce server carries out registration, renewal and deletion of users.
(4) The commerce server manages the charging information of the image distribution service of the users (for example, user ID, use date, image number, image size, resolution, expiration date, output/using method such as print output or the like) (charging server).
(5) The commerce server manages registration information of contents.
(6) The commerce server manages image distribution service logs of users.
(7) The commerce server and the content server are connected to each other by a high-security system.

The basic function, construction and basic processing flow of the program stored in the information storage medium according to this invention will be described hereunder.

The processing flow described below is an example, and this invention is not limited to this processing flow.

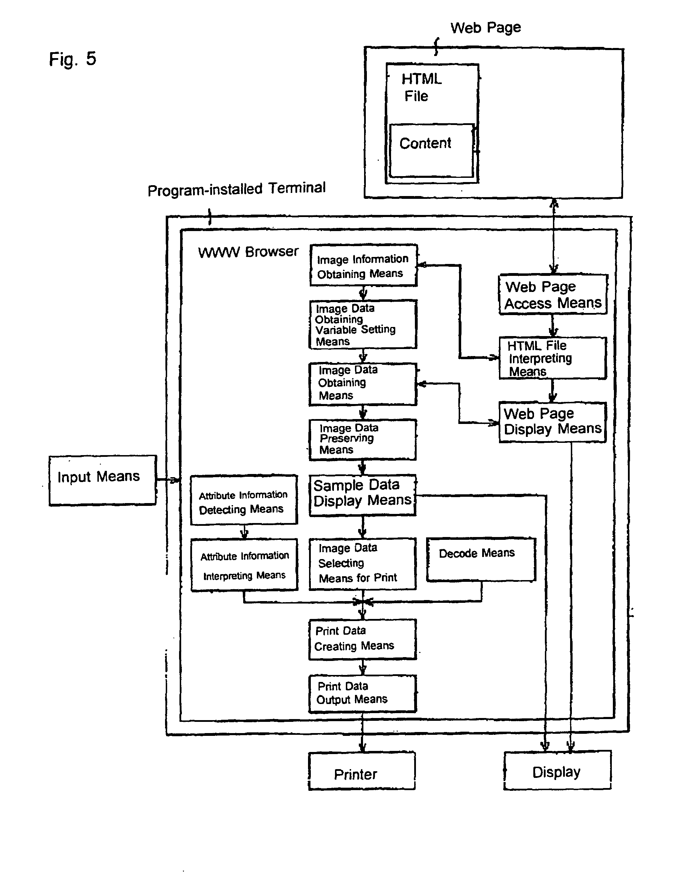

Fig. 5 is a function block diagram showing the processing and the functions of the program stored in the information storage medium according to this invention.

The information storage medium for storing the program contains a storage medium such as CD-ROM, MO or a floppy disk, a large-scale storage device such as a hard disk or a server, or other various information storage media.

The program stored in the information storage medium according to this invention is equipped to an application program having a browser function, or equipped to the application program having the browser function by plug-in.

A display serving as a display unit, a printer or the like as an output device and input means are connected to a user terminal which has a browser stored therein and is operated by CPU and used by a user to utilize contents. A keyboard, a mouse or the like is used as the input means.

An instruction and an input of data to the browser are processed into choices and execution results by the input means, and the contents thereof are displayed on the display to assist the user.

A user can connect a computer terminal to a network by using a browser, and access a Web page.

As shown in Fig. 5, the browser comprises a Web page access means, an HTML file interpreting means, a Web page display means, an image information obtaining information, a variable setting means for obtaining image data, an image data obtaining means, an image data preserving means, a sample data display means, a print image data selecting means, an attribute information detecting means, an attribute information storage means, a decode means print data creating means, and a print data output means. The Web page comprises a content file group such as an HTML file, sample data or the like.

### (Embodiment 1)

The invention according to claim 1 is used to charge when a content is downloaded and output from a content server existing on a computer network as a normal mode.

The data structure of the content is designed so that the content contains sample data, the data of content main body, charging information on the compensation for use of the content, attribute information on control of the use of the content, and a unique ID for identifying the content, and it is shown in Fig 1.

The present invention relates to a computer-readable information storage medium stored with a program used in cooperation with a browser equipped to a user terminal, the program being equipped with authentication key information obtaining and transmitting means for obtaining information of an authentication key for charging to a user after passing through processing of setting the authentication key when the user downloads a content, and transmitting the information to the content server, content obtaining means for carrying out authentication, judging whether the authentication is permitted or not, and promoting download if the authentication is permitted, use information indicating means for indicating use information of the content, and output/use control means for detecting attribute information on control of content use which is contained the content, downloading the content and then outputting/using the content according to the use information thus indicated, and transmitting/receiving information for carrying out the charging in accordance with the output/use based on the use information of the content to/from the content server.

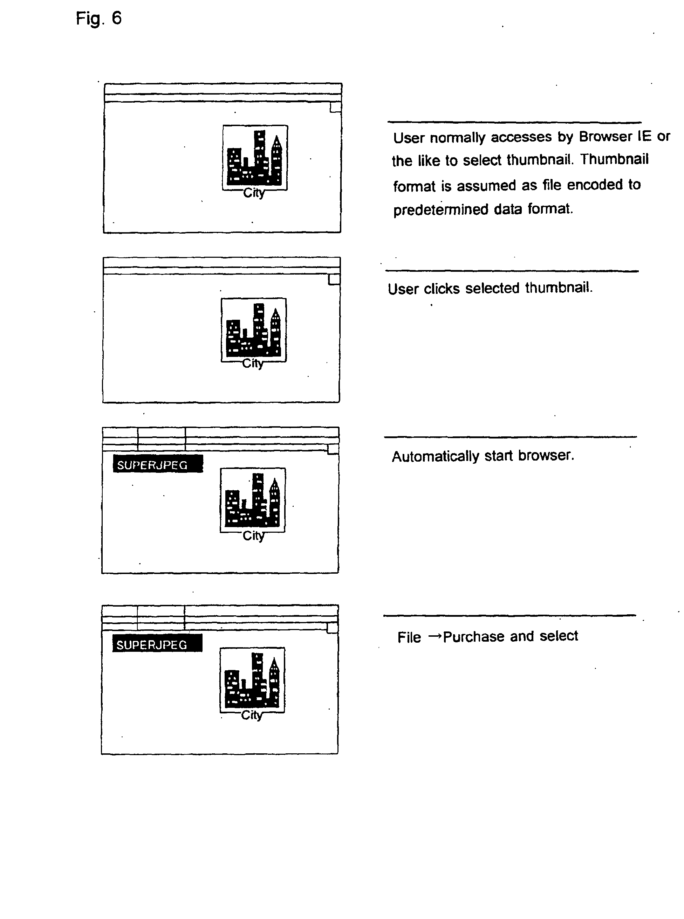

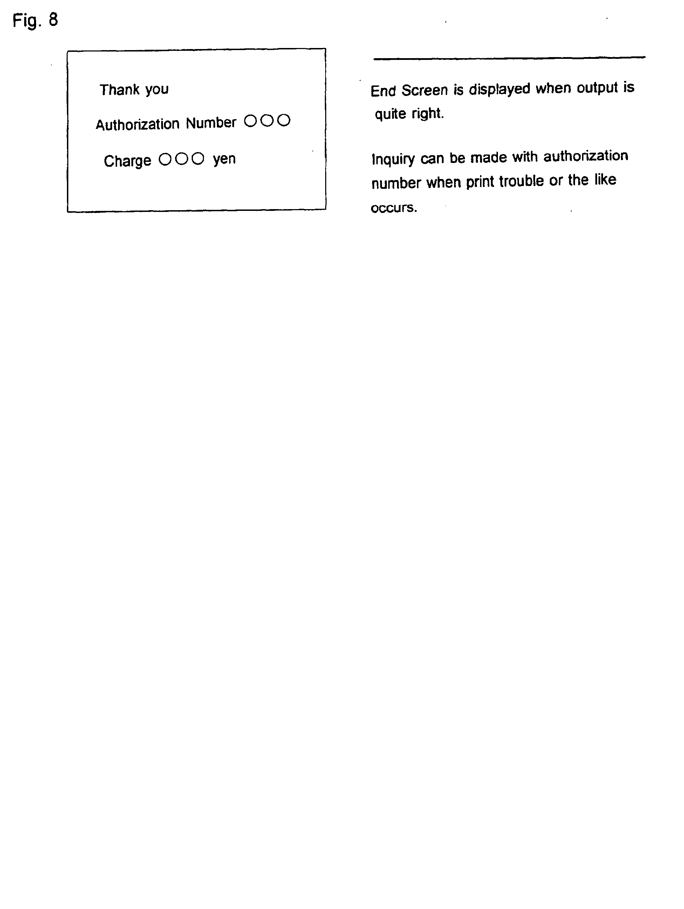

Figs. 6, 7 and 8 are screen image diagrams showing an examples of a program-operating screen of the user terminal screen in the charging processing when a content is downloaded from the content server and output/used by using the program stored in the information storage medium according to this invention.

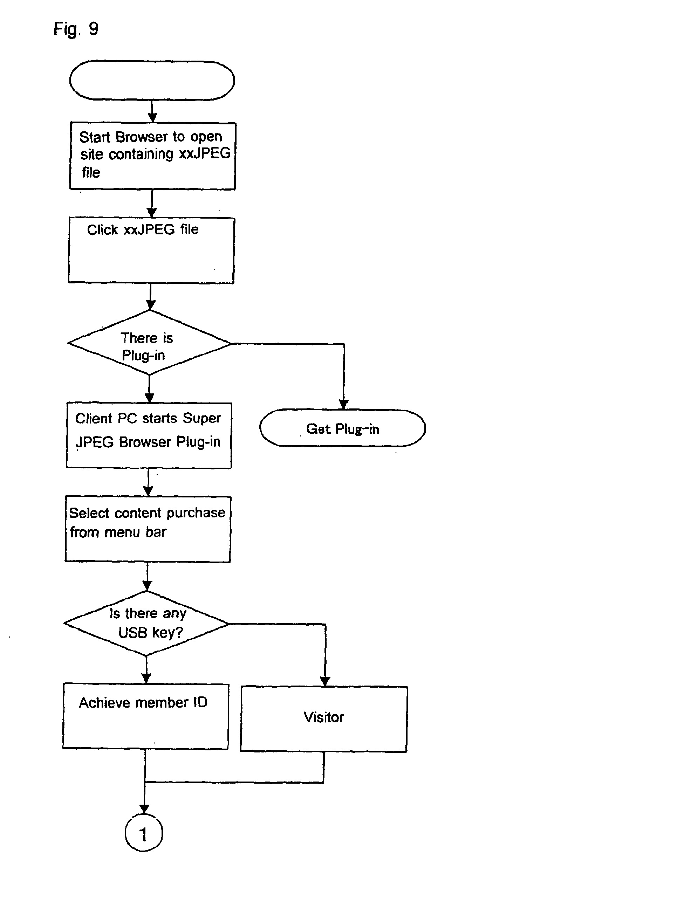

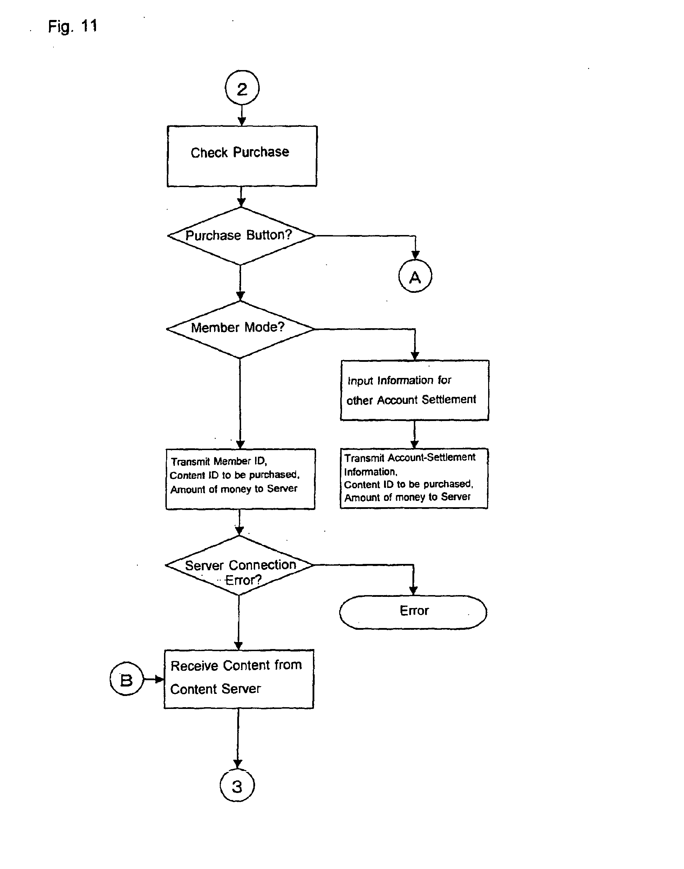

Figs. 9, 10, 11 and 12 are flowcharts showing the flow of the basic processing when the above-described processing is carried out by using the program stored in the information storage medium of this invention.

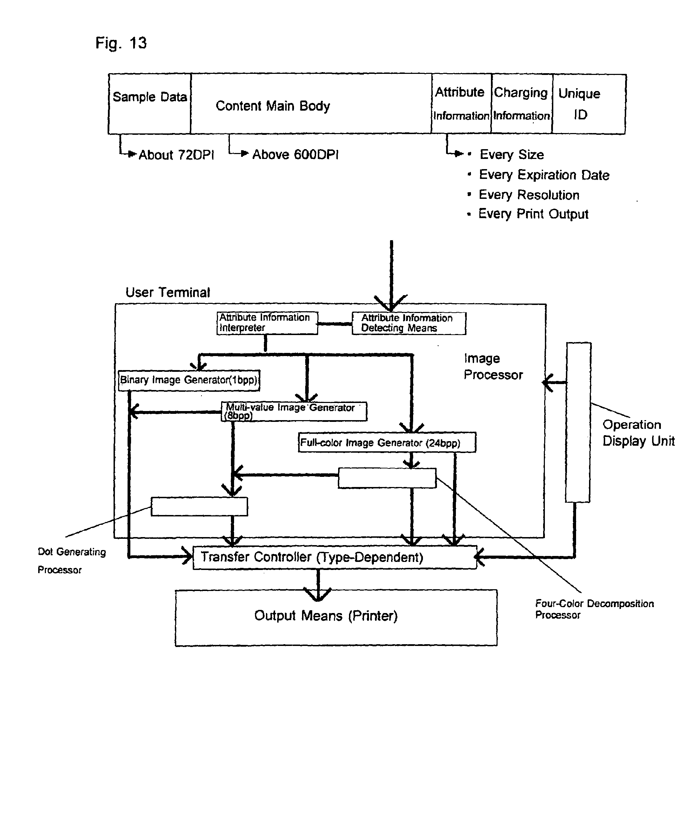

Fig. 13 is a block diagram showing an example of the data flow along which attribute information contained in an image content is detected and interpreted and the content is output/used according to the attribute information on the control of the content use at a user terminal which downloads the image content.

Here, the operation and function of the program containing the browser will be described.

The program has a function of displaying a Web page containing sample data of a content as an image on a display, and also has a function of carrying out the charging processing on the basis of a content using method and other using conditions at the time of use of the content such as output of the content or the like, a function of decoding the content and a content output function such as a function of printing the content on a sheet by using a printer.

The Web page is a file such as an HTML file or the like which contains a content, and the sample data contained in the content is read out to display the Web page. The user can view the sample data on the screen, or listens to a sample of audio data.

The Web page access means has a function of accessing a Web page on a Web server and reading an HTML file and a content contained therein. However, the user cannot view additional data such as the main body of the content, the attribute information contained in the content, the use information, the unique ID, etc. because they are still decoded.

The HTML file interpreting means interprets the HTML file, etc. read by the Web page access means.

The Web page display means displays on a display an interpretation result of the HTML file or the like by the HTML file interpreting means. At this time, the browser reads out the sample data contained in the Web page and displays it by drawing or the like.

On the basis of the interpretation result of the HTML file and the sample data by the HTML file interpreting means, the image information obtaining means obtains information as to at which area of the Web page the sample data is contained and should be displayed.

The flow of the basic processing according to this invention will be described hereunder.

The flow of the processing described below is an example, and this invention is not limited to the following embodiment.

First, when the user uses a content in the system by downloading or outputting the content, the user uses the program of this invention. The program is achieved by package media stored in an information storage medium such as CD-ROM or the like or by on-line downloading, and installed in the user terminal. In the flowchart of Fig. 9, an access is made to a content-providing Web site to use a content, and if it is detected that the program concerned is not equipped to the user terminal when the content is actually used, it is desirable to promote downloading of the program. This is generally adopted in the case of plug-in software.

First, since the user uses an authentication key when he/she makes use of a content like downloading or outputting of the content by using the system of this invention, the user is required to prepare for the authentication key of hardware (for example, USB key or the like) in advance or when using the system.

ID for identifying the user is set in the authentication key.

Furthermore., attribute information for limiting the users of the content or controlling the distribution or use of the content is set in the authentication key.

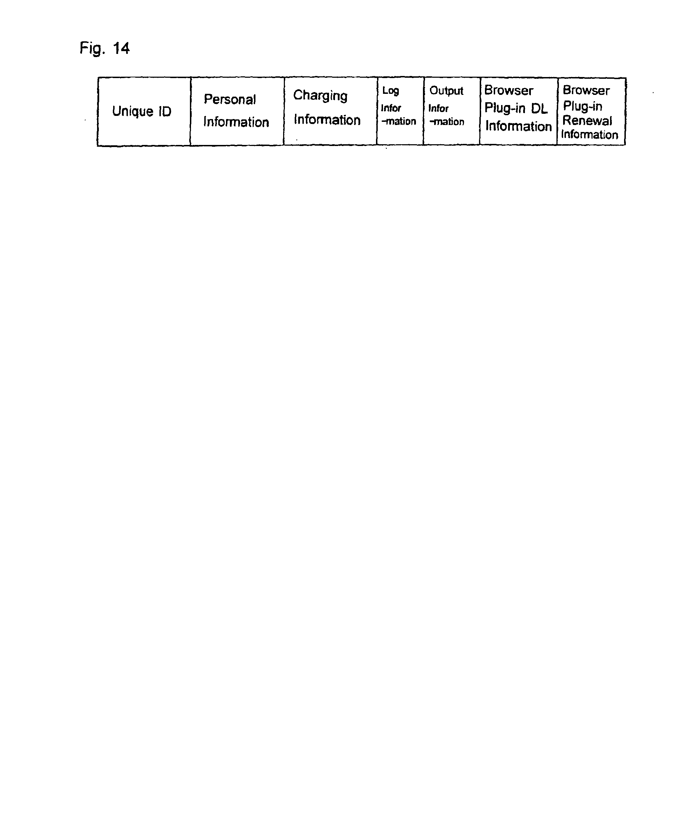

Fig. 14 is a diagram showing information set in an IC chip of USB when a USB key is used as an example of the authentication key.

Information such as a unique ID, personal information, charging information, attribute information, log information, output information, browser plug-in/download information, browser plug-in renewal information, etc. is set.

The portal Web server normally provides services such as downloading or output of contents, and manages a Web site (portal site) for charging for use of contents. A user who wishes to use a content accesses the portal Web server by inputting URL in a browser equipped to a user terminal connected to a network or the like.

Here, the user terminal contains not only a computer terminal such as a personal computer, but also a portable information terminal such as a cellular phone having a browsing function, a dedicated terminal, an information home electric appliance such as Web-TV or a game machine, or and other kinds of terminals.

It is desirable that at the portal site, member information is registered for a user who is provided with a service for use of contents, thereby carrying out member registration. The member information contains address, name, telephone number, electronic mail address, charging (account settlement) method, and other information.

The authentication key for authentication/content charging as described later is issued by registering/managing the member information as described above.

In the style that the authentication key is issued on-line, it is desirable that the user inputs and transmits the member information or the like at the portal site, and after the information thus transmitted is stored and examined in the commerce server, the authentication key is issued.

The member information is managed at the commerce server.

Furthermore, registration, renewal and deletion of users are carried out at the commerce server.

Alternatively, when a content output shop terminal provided by the system manager side is connected to the computer network, the authentication key may be issued at the content output shop by inputting/transmitting information from the content output shop terminal.

As described above, a user who wishes to use a content connects to a portal site by inputting URL or the like in a browser equipped to the terminal of the user connected to a network.

Here, the user views to select his/her favorable content from contents of various genres and content formats or the like, however, all images having various formats are set so that the user at the portal site can view only the sample images thereof.

That is, only the sample data in the data contained in the content is displayed at the Web site.

Fig. 6 shows a screen image in this case, and the sample data is a thumbnail image when the content main body is an image.

Furthermore, Fig. 6 shows an embodiment of the program in the invention according to claim 7, which is started when a user selects or clicks the sample data of a content displayed.

The content is stored in the content server, and the commerce server accepts a processing request from the portal Web server by an action such as user's selection of the content on the browser screen.

The content server accepts the processing request from the commerce server, and transmits a processing result to the commerce server. The commerce server transmits the processing result to the Web server to display the sample data on the browser screen.

The processing of the data transmitted/received between the browser equipped to the user terminal and the server side is carried out in the following manner.

That is, the content registration information owned by the commerce server is referred to on the basis of the unique ID contained in the content selected or the like to extract the corresponding content stored in the content server, the sample data in the corresponding content is read out to transmit the processing result to the commerce server, and the commerce server transmits the processing result to the Web server to display the sample data or the like.

In the case of audio data, a sample sound is output.

At this time point, it is required to go to the following processing in order to use the content main body because the content main body is still decoded.

At the user terminal, the user views sample data of contents or the like to selects a content which he/she wishes to use.

Subsequently, the user selects from the sample data of the contents thus viewed or the like the content which he/she wishes to use, determines whether the content should be used (purchased) or not, and transmits the information. The information thus transmitted is received by the portal Web server.

When the content is not used, the user carries out the processing of going to another Web page or returning the preceding page or the like.

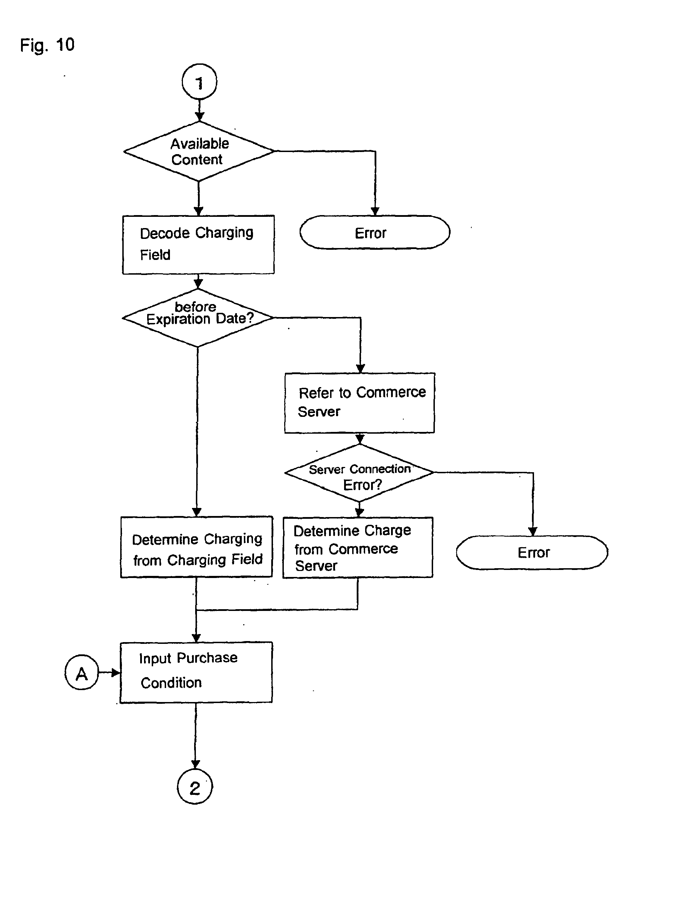

In the flowchart of Fig. 10, the content to be used is selected, and if the content is usable, the charging information contained in the content is decoded.

The user checks the charge corresponding to the use of the content when the content is used on the browser screen at the user terminal.

The charging information (rule for charging) is set at the commerce server on a content basis in advance in accordance with each size, each resolution, each expiration date or the like for contents such as images, and the commerce server (charging server) manages this information for every user and every ID content.

The content-basis charging information is a charging point based on classification/attribute/using method or the like as described below.

That is, it is the charging point based on each content, each content size, each content output size (A0, A1, A2, A3, A4, ..), each resolution, each expiration date, each print output destination, each member, each license/contract content, each metered rate or other classification/attribute/using method or the like.

The content registration information is managed at the commerce server. The content registration information associates the location, genre, data format, creator or owner, a payment destination of charged money and other information of each content with the content ID of the content concerned, and stored in the commerce server.

Subsequently, it is desirable to check whether the setting of the charging information (fee) of a content displayed is based on a fee structure before the expiration date, and if the expiration date has elapsed, it would be necessary to inquire to the commerce sever side and refer to the latest charging information.

Subsequently, on the browser screen of the user terminal, the user checks the charging information, determines the use/purchase method of the content, etc., and then carries out the use information indicating processing of indicating use information of the content.

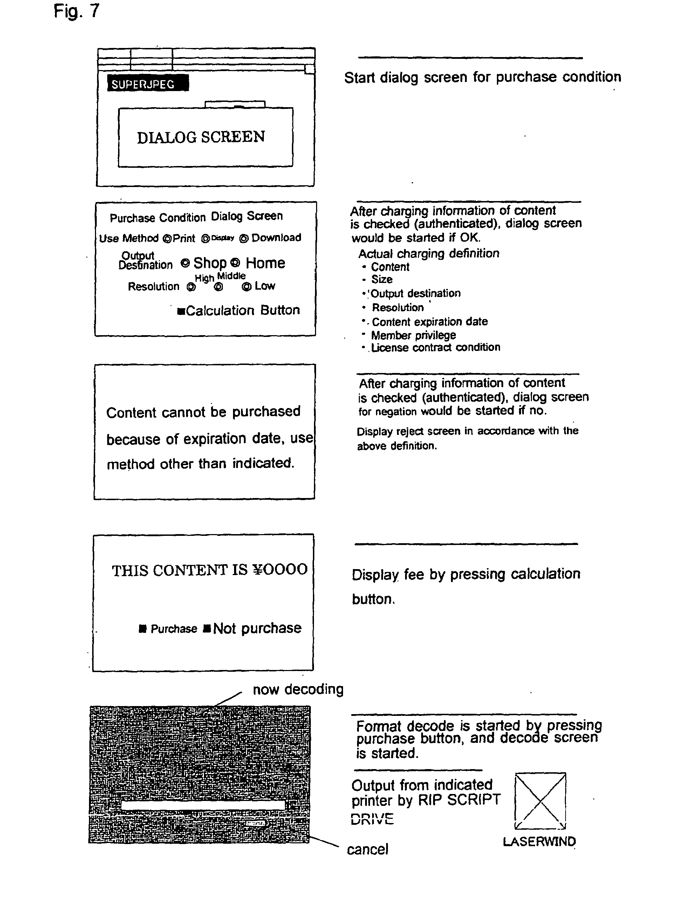

Fig. 7 shows an example of a dialog screen, and the using method such as print, display, download or the like, the resolution, size and output destination of the content and other indications are carried out to indicate the use information.

When the content is used (purchased), the following processing is carried out.

The processing request from the portal Web server is accepted by the commerce server, and authentication of the user is carried out (authentication server function).

Authentication of the charging to the user is desirably carried out by using an authentication key of hardware (for example, USB key or the like). That is, the information to be authenticated is stored in hardware such as a USB key or the like, and it is set into the user terminal when the authentication processing is carried out.

The authentication key for the charging to the user and the control of the content use is set when the user downloads the content.

ID for identifying the user is set in the authentication key (USB key or the like). Furthermore, the money used by the user in the charging processing or the frequency of available points similar to the money is also set in the authentication key.

The authentication key may be further equipped with a password, a one-time password, and information for user authentication based on a system using a public key and a secrete key or other various authentication systems.

When the user uses the content charging system, the user uses points for calculating the money or the like to settle an account. As described above, the points are set every content in accordance with the size, resolution, expiration date, etc. of the contents such as images.

The user ID stored in the authentication key and the information on the money or the frequency of available points similar to the money which is stored in association with the user ID in the authentication key can be managed by the commerce server (charging server) every user, and in this case, the user authentication and the management of the charging information for each user can be performed by collating these data therebetween.

Subsequently, the processing of detecting the attribute information on the control of the content use which is contained in the content is carried out, and the processing of decoding the content main body on the basis of the use information and using the content is carried out in the case where the charging processing is authenticated in response to the use request based on the use information and use such as output of the content is made when the content main body is used.

The commerce server (authentication server) carries out authentication, and it is judged on the basis of the authentication result whether use of a content is permitted or not. The processing result is returned from the commerce server to the portal Web server, and an HTML file or the like which indicates the positive or negative result of the authentication is transmitted to the user terminal. That is, the authentication result is displayed on the screen of the user terminal.

When permission is given on the basis of the authentication, a download instruction is transmitted form the commerce server to the content server with the user terminal set as a transmission (download) destination, and the processing goes to the download processing. Before going to the download processing, the processing of promoting the user to further check when the downloading should be carried out or not may be added.

If these processing is cleared, the download processing is carried out.

That is, the content registration information owned by the commerce server is referred to on the basis of the unique ID contained in the content selected or the like to extract the corresponding content stored in the content server, and the content data in the content thus extracted are read out and transmitted (downloaded) to the user terminal.

It is desirable that the use service log of download, etc. of the user is managed at the commerce server.

It is a normal style that the contents which the user can view before content downloading/charging processing are limited to the sample data .

Here, at the stage that the download is carried out, the use obtains a content by downloading the content (that is, not the sample data, but the content main body). However, the content is stored in the content server while encoded according to a predetermined format, so that the content main body is protected so that it is impossible to be used.

The content downloaded contains the charging information on the compensation for use of the content, and the attribute information on control of the content use.

The content used in this invention contains the attribute information to control use of the content.

For example, there has been hitherto known a technique in which charging information and print target data are contained in communication print data received in order to perform proper charging management in a network printer adapted for the multi-protocol, for example.

There has been implemented such a network printer that the charging management can be performed by using the multi-protocol communication print data containing the charging information and the print target data as described above. However, in this invention, the content data contains the charging information for carrying out the charging processing in accordance with the content size, the content resolution, the content output method, etc., and the attribute information for restricting users like membership/non-membership or the like, and controlling distribution/use of contents such as restriction of the content output or use method/frequency or the like.

Here, the user is allowed to output a content (that is, not the sample data, but the content main body) by decoding the content.

As described above, since the contents stored in the content server are encoded according to the predetermined data format, the content server carries out the download processing and transmits the content to the user terminal in response to the use request information of the content indicated and transmitted by the authenticated user, and the attribute information contained in the content is detected in the attribute information detecting means of the program installed in the user terminal. The attribute information interpreting means interprets the attribute information thus detected to control whether the content main body should be decoded or not to use the content.

When the charging processing based on the use request information is authenticated and the content is use, the charging at the use time is carried out in connection with the processing of decoding the content on the basis of the use request information and making use of the content thus decoded like outputting the content.

When the charging processing based on the use request information is not authenticated, it is made impossible to decode and use the content.

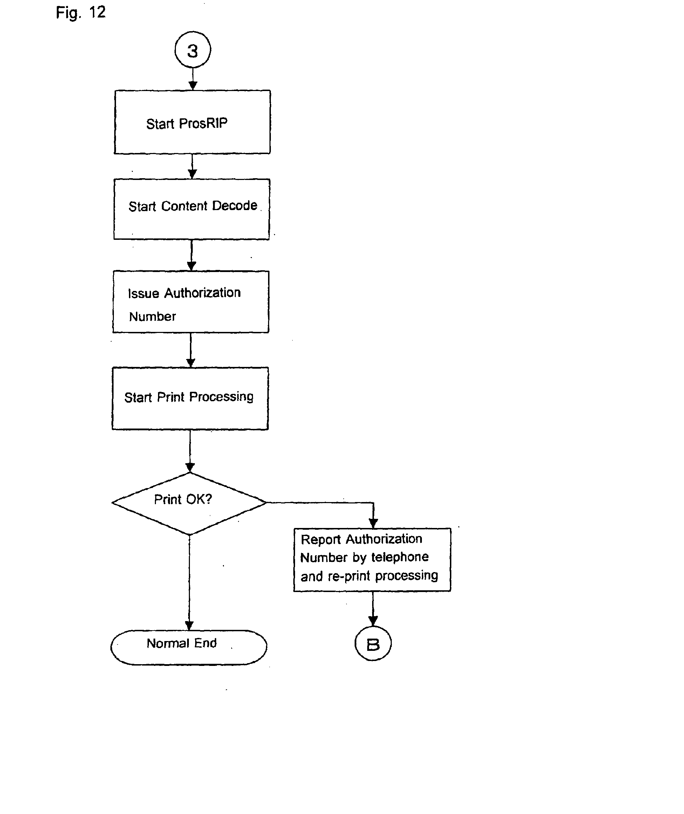

Fig. 12 is a flowchart showing the flow of the basic construction when the charging at the use time is carried out in connection with the processing of decoding and outputting/using the content on the basis of the use request information.

Fig. 13 is a block diagram showing an example of the data flow along which the user terminal downloading an image content detects the attribute information contained in the content to interpret the attribute information, decodes the content according to the attribute information on the control of the content use and then makes use of the content thus decoded like outputting the content.

As described above, the available service log of the download of the user, etc. is preferably managed by the commerce server, and the available user log is transmitted from the user terminal to the system side of this invention. Particularly, this is necessary to complete the charging processing under the condition that the output processing such as print is normally completed.

According to the invention of claim 3, in the program according to claim 1 or 2, the content used in the system contains sample data of the content, charging information on compensation information of the content, an unique ID for identifying the content, and URL information indicating the location of the content main body in place of the data of the content main body.

Fig. 2 is a diagram showing the data structure of an example of the content in this case.

In the program installed in the user terminal, the charging at the use time is carried out in connection with the processing of detecting and interpreting the attribute information concerning the control of the content use contained in the content by the attribute information detecting means for detecting the attribute information and the attribute information interpreting means for interpreting the attribute information thus detected, the processing of carrying out authentication for the content use and the charging to the user, the content obtaining processing of obtaining the content at the user terminal by downloading or the like, the use information indicating means for indicating the use information of the content by the user, and the processing of decoding the content main body on the basis of the use information and making use of the content like outputting the content in the case where the charging processing is authenticated in response to the use request based on the use information and the content is used when the content main body located at the URL is used.

In this embodiment, the content is stored in the content server in association with the unique ID of the content registration information managed by the commerce server. In place of the content data contained in the content, the URL information indicating the location of the content main body is contained. Therefore, the data of the content main body must be stored at the place indicated by the URL separately from the content.

The user can view/listen to or download the content before the reception processing of the decode key. However, since the charging processing has not yet been completed at this time point, it is a normal style that the data of the content main body are located at the place of the URL and the use/output of the content is kept to be restricted on the basis of the attribute information on the control of the content use which is contained in the content so that the user can view/listen to or output/use only the sample data of the content.

Here, at the stage that the charging processing at the use time such as the print output time is carried out, the content (that is, not the sample data, but the content main body) is decoded and allowed to be used.

As described above, since the content stored in the content server is encoded according to the predetermined data format, The content server carries out the download processing and transmitting the content to the user terminal on the basis of the use request information of the content indicated and transmitted by the authenticated user. The user terminal carries out the processing of detecting the attribute information contained in the content.

When the charging processing based on the use request information is authenticated and the content is used, the charging at the use time is carried out in connection with the processing of decoding the content on the basis of the use request information and making use of the content like outputting the content.

When the charging processing based on the use request information is not authenticated, it is made impossible to decode and use the content.

The basic processing flow is common to the invention according to claim 2.

In this embodiment, the URL information indicating the location of the content main body is contained, and thus the data of the content main body is stored at the place indicated by the URL separately from the content.

Therefore, particularly, the content contains the following embodiment.

An HTML file, an XML file, a CHTML file or the like which is displayed on Web (contains a closed network such as an intra-network or the like) is a content itself, and the sample data of the content, the URL information indicating the location of the content main body, the charging information on the compensation information of the content, the attribute information on the control of the content use and the unique ID for identifying the content are contained in this file.

The content main body exists at the place indicated by URL .

At a tag in the source of a file which defines uniquely, the charging information on the compensation information for the content, the attribute information on the control of the content use, and the unique ID for identifying the content are contained in the file. The unique tag definition is particularly effective to carry out the content management for files using XML or the like in cooperation with the database in which the content main body is stored.

When contents are used, information is transmitted/received between the user terminal and the system of this invention, and at the user terminal charging information and attribute information defined by tags are detected, and the contents are output/used in such a manner that use such as output is allowed by carrying out the charging processing.

According to the invention of claim 4, in the program of claim 1 or 2, the content used in the system contains sample data of the content, charging information on compensation information of the content, an unique ID for identifying the content, and further a content location ID for identifying the location of the content main body on the network in place of the data of the content main body.

Fig. 3 is a diagram showing the data structure of an example of the content.

In the program installed in the user terminal, the charging at the use time is carried out in connection with the processing of detecting and interpreting the attribute information on the control of the content use contained in the content by the attribute information detecting means for detecting the attribute information and the attribute information interpreting means for interpreting the attribute information thus detected, the processing of carrying out authentication for the content use and the charging to the user, the content obtaining processing of obtaining the content at the user terminal by downloading or the like, the use information indicating processing for indicating the use information of the content by the user, and the processing of decoding the content main body and making use of the content like outputting the content in the case where the charging processing is authenticated in response to the use request based on the use information and the content is output/used when the content main body located at the place identified by the content location ID is used.

According to this embodiment, on a computer network are equipped a content server for storing contents such as images, a portal WEB server which users access to use and purchase contents, and a commerce server for managing information on the users and information on use/purchase of the contents of the users. The content contains sample data of the content, a content location ID for identifying the location of the content main body on the network, charging information on the compensation for use of the content, attribute information on control of the content use, and an unique ID for identifying the content.

The charging at the use time is carried out in connection with the processing of displaying the content at the user terminal by the user, the processing of setting the authentication key for the charging to the user and the control of the content use when the user downloads the content, the processing of carrying out the authentication of the user accessing the system by using the authentication key, the processing of transmitting the content to the user terminal in response to the use request information of the content indicated and transmitted by the authenticated user, and detecting the attribute information contained in the content at the user terminal, and the processing of decoding on the basis of the use request information and making use of the content like outputting the content when the charging processing based on the use request information is authenticated and the content is used.

If the charging processing based on the use request information is not authenticated, it is made impossible to decode and use the content.

The basic flow of the processing is common to the embodiments 2 and 3 of the charging system.

In this embodiment, the content is stored in the content server in association with the unique ID of the content registration information managed by the commerce server. In place of the content data contained in the content, the content location ID for identifying the location of the content main body on the network is contained in the content, so that the data of the content main body must be stored at the place indicated by the content location ID separately from the content.

The user can view/listen to or download the content before the reception processing of the decode key. However, since the charging processing has not yet been completed at this time point, the data of the content main body is located at the place indicated by the content location ID and use/output of the content is kept to be restricted on the basis of the attribute information on the control of content use contained in the content so that only the sample data of the content can be viewed/listened to or output/used.

Here, at the time of use such as print output or the like, that is, at the stage that the charging processing is carried out, the user can use the content by decoding the content (that is, not the sample data, but the content main body).

As described above, since the content stored in the content server is encoded according to the predetermined data format, the content server carries out the download processing, and then transmits the content to the user terminal in response to the use information of the content indicated and transmitted by the authenticated user, and the user terminal carries out the processing of detecting the attribute information contained in the content.

When the charging processing based on the use information is authenticated and the content is used, the charging at the use time is carried out in connection with the processing of decoding the content on the basis of the use information and making use of the content like outputting the content.

If the charging processing based on the use information is not authenticated, it is made impossible to decode and use the content.

Furthermore, in this embodiment, the content location ID for identifying the location of the content main body on the network is contained, so that the data of the content main body is stored at the place indicated by the content identification ID separately from the content.

Therefore, particularly, the content has the following embodiment.

An HTML file, an XML file, a CHTML file or the like which is displayed on WEB (contains a closed network such as an intra-network or the like) is a content itself, and the s mple data of the content, the URL information indicating the location of the content main body, the charging information on the compensation information of the content, the attribute information on the control of the content use and the unique ID for identifying the content are contained in this file.

The content main body exists at the place indicated by the content identification ID.

At a tag in the source of a file which defines uniquely, the charging information on the compensation information for the content, the attribute information on the control of the content use, and the unique ID for identifying the content are contained in the file. The unique tag definition is particularly effective to carry out the content management for files using XML or the like in cooperation with the database in which the content main body is stored.

When contents are used, information is transmitted/received between the user terminal and the system of this invention, and at the user terminal charging information and attribute information defined by tags are detected, and the contents are output/used in such a manner that use such as output is allowed by carrying out the charging processing.

In any case, the content output/use method contains a method of outputting from a printer connected to the user terminal, a method of outputting to an external storage device equipped or connected to the user terminal, or other output/use methods.

### Industrial Applicability

As described above, according to this invention, there is provided an information storage medium stored with the program for carrying out the charging processing at the time when the user downloads or outputs the content, particularly carrying out the charging processing in accordance with the size, resolution, output/use method, etc. of the content when the charging is carried out, and protecting the content when no charging processing is carried out (that is, neither download nor output is carried out).

Furthermore, there can be provided an information recording medium stored with the program that is coefficient to carry out the charging processing based on the content size, the content resolution, the content output/use method, etc. when the charging is carried out and allows a content user to instruct the size, the resolution, the output/use method, etc. at the time when the charging is carried out.

Still furthermore, a program-installed device such as a computer terminal in which the program concerned is stored may be provided

## Claims

1. A computer-readable information storage medium having a program stored therein, the program being installed in a user terminal and used when data containing at least data of the main body of a content or data for identifying and indicating the data of the content, and attribute information on control of use of the content are obtained and used, **characterized in that** the program is equipped with attribute information detecting means for detecting the attribute information, attribute information interpreting means for interpreting the attribute information thus detected, decode means for decoding the content according to the attribute information thus interpreted, and data control means for carrying out data processing for output/use control and charging at the output/use time, wherein the charging at the use time is carried out by the processing of authenticating a user for the content use and charging, content obtaining processing of obtaining a content at the user terminal by download or the like, use information indicating processing of indicating use information of the content by the user, processing of detecting the attribute information on the control of use of the content which is contained in the content, and processing of decoding the content main body on the basis of the use information when charging processing is authenticated in response to a use request based on the use information and the content main body is used, and making use of the content like outputting the content or the like, and if the charging processing in response to the use request based on the use information is not authenticated, it is made impossible to decode and use the content main body.

2. A computer-readable information storage medium having a program stored therein, the program being installed in a user terminal and used to carry out charging processing when using a content containing sample data of the content, the data of the main body of the content, charging information on a compensation for use of the content, attribute information on control of the content use, and a unique ID for identifying the content, **characterized in that** the program is equipped with attribute information detecting means for detecting the attribute information, attribute information interpreting means for interpreting the attribute information thus detected, decode means for decoding the content according to the attribute information thus interpreted, and data control means for carrying out data processing for output/use control and charging at the output/use time, wherein the charging at the use time is carried out by the processing of authenticating a user for the content use and charging, content obtaining processing of obtaining a content at the user terminal by download or the like, use information indicating processing of indicating use information of the content by the user, processing of detecting the attribute information on the control of use of the content which is contained in the content, and processing of decoding the content main body on the basis of the use information when charging processing is authenticated in response to a use request based on the use information and the content main body is used, and making use of the content like outputting the content or the like, and if the charging processing in response to the use request based on the use information is not authenticated, it is made impossible to decode and use the content main body.

3. The computer-readable information storage medium stored with the program for the content charging according to claim 1 or 2, wherein the content used in the system contains sample data of the content, charging information on compensation information of the content, a unique ID for identifying the content, and further URL information indicating the location of the content main body in place of the data of the content main body, the program is equipped with attribute information detecting means for detecting the attribute information, attribute information interpreting means for interpreting the attribute information thus detected, decode means for decoding the content according to the attribute information thus interpreted, and data control means for carrying out data processing for output/use control and charging at the output/use time; and the charging at the use time is carried out in connection with processing of authenticating a user for the content use and charging, content obtaining processing of obtaining a content at the user terminal by download or the like, use information indicating processing of indicating use information of the content by the user, processing of detecting the attribute information on the control of use of the content which is contained in the content, and processing of decoding the content main body on the basis of the use information if charging processing is authenticated in response to a use request based on the use information to use a content when the content main body located at the URL is used, and making use of the content like outputting the content or the like, and if the charging processing in response to the use request based on the use information is not authenticated, it is made impossible to decode and use the content main body.

4. The computer-readable information storage medium stored with the program for the content charging according to claim 1 or 2, wherein the content used in the system contains sample data of the content,. charging information on compensation information of the content, a unique ID for identifying the content, and further a content location ID for identifying the location of the content main body on a network in place of the data of the content main body, the program is equipped with attribute information detecting means for detecting the attribute information, attribute information interpreting means for interpreting the attribute information thus detected, decode means for decoding the content according to the attribute information thus interpreted, and data control means for carrying out data processing for output/use control and charging at the output/use time; and the charging at the use time is carried out in connection with processing of authenticating a user for the content use and charging, content obtaining processing of obtaining a content at the user terminal by download or the like, use information indicating processing of indicating use information of the content by the user, processing of detecting the attribute information on the control of use of the content which is contained in the content, and processing of decoding the content main body on the basis of the use information if charging processing is authenticated in response to a use request based on the use information to use the content when using the content main body located on the network which is identified by the content location ID, and making use of the content like outputting the content or the like, and if the charging processing in response to the use request based on the use information is not authenticated, it is made impossible to decode and use the content main body.

5. The computer-readable information storage medium having the program for the content charge according to any one of claims 1 to 4, **characterized in that** the use of the content corresponds to an output from a printer connected to the user terminal, the attribute information on the control of the content use which is contained in the content is detected, through the processing of downloading the content, an output instruction is made from data control means to a printer on the basis of the attribute information for outputting the content according to the indicated use information.

6. The computer-readable information storage medium stored with the program for the content charge according to any one of claims 1 to 4, **characterized in that** the use of the content corresponds to an output to an external storage device equipped or connected to the user terminal, the attribute information on the control of the content use which is contained in the content is detected, through the processing of downloading the content an output instruction is made from data control means to the external storage device on the basis of the attribute information for outputting the content according to the indicated use information.

7. The computer-readable information storage medium stored with the program for the content charging according to any one of claims 1 to 6, **characterized in that** the program is started when the user selects or clicks the sample data of a content displayed.

8. The computer-readable information storage medium stored with the program for the content charging according to any one of claims 1 to 7, **characterized in that** the program is equipped with indicating means for indicating one or a plurality of size, expiration date, resolution, output/using method and other conditions of the content, and the charging is carried out according to a condition indicated by the user.

9. A program-installed device for content charging which is carried out in connection with use of a content by using a computer system having input means, storage means, control means, display means and output means, **characterized in that** the program stored in the information storage medium as claimed in any one of claims 1 to 8 is stored in the storage means.

10. The program-installed device for content charging according to claim 9, wherein in processing of authenticating a user, authentication is carried out by authentication means using a hardware key equipped to a user terminal.

11. The computer-readable information storage medium stored with the program for content charging according to claim 9 or 10, **characterized in that** the content is achieved through the processing of obtaining from a content server existing on a computer network by download or the like, and information for carrying out the charging in accordance with an output based on use information of the content is received/transmitted from/to the content server.
